# EUROPÄISCHE PATENTSCHRIFT

(11) **EP 2 217 118 B1**
(45) Veröffentlichungstag und Bekanntmachung des Hinweises auf die Patenterteilung: **26.06.2013**
(21) Anmeldenummer: 08856067.7
(22) Anmeldetag: 04.12.2008
(51) Int. Cl.: A47J 43/00, A47J 43/07

(54) **ELEKTROMOTORISCH BETRIEBENE KÜCHENMASCHINE**
FOOD PROCESSOR DRIVEN BY AN ELECTRIC MOTOR
ROBOT MÉNAGER À MOTEUR ÉLECTRIQUE

(30) Priorität: 07.12.2007 DE 102007059236
(43) Veröffentlichungstag der Anmeldung: 18.08.2010
(60) Teilanmeldung: 11190745.7
(73) Patentinhaber: Vorwerk & Co. Interholding GmbH, 42275 Wuppertal (DE)
(72) Erfinder: WISSMANN, Michael, 40822 Mettmann (DE)
(74) Vertreter: Müller, Enno
(86) Internationale Anmeldenummer: PCT/EP2008/066757
(87) Internationale Veröffentlichungsnummer: WO 2009/071610

(56) Entgegenhaltungen:
- EP-A- 1 533 748
- DE-A1-102004 005 607
- US-B1- 6 283 014
- US-B1- 6 552 309

## Beschreibung

Die Erfindung betrifft ein Verfahren zur Nutzung eines Systems bestehend aus einer elektromotorisch betriebenen Küchenmaschine und einem weiteren Telefon, vorzugsweise mit einem Rührgefäß und einem Antrieb für ein Rührwerk in dem Rührgefäß, wobei die Küchenmaschine weiter einen Netzstecker aufweist und in der Küchenmaschine eine zum Empfang und Auswertung von Funk - oder Telefonsignalen und auch zum Senden entsprechender Signale geeignete Elektronik angeordnet ist, und einem weiteren Telefon.

Derartige Küchenmaschinen, wie sie in dem System zur Anwendung kommen, sind bereits in vielfältiger Ausgestaltung bekannt geworden. Es wird beispielsweise auf die Druckschriften DE 44 14 825, DE 19713 567 A1, DE 102 26 94 A1, DE 102 269 40 A1, DE 102 269 39 A1, DE 102 22 378 A1, DE 102 22 376 A1, DE 10212 029 A1, DE 10210 442 A1, DE 100 53319 A1, DE 100 485 35 A1, DE 10019 126 A1 verwiesen. Insbesondere wird auch auf die DE 10 2004 005 607 A1 Bezug genommen.

Der Erfindung stellt sich die Aufgabe, die Nutzung eines derartigen Systems bezüglich der Kundenfreundlichkeit und auch der Eingriffsmöglichkeiten vorteilhafter ausgestalten. Hierunter ist beispielsweise die Möglichkeit zu verstehen, eventuelle Fehlfunktionen oder nicht erklärbare Funktionen der Küchenmaschine rascher erkennen zu können. Weiter ist hierunter beispielsweise zu verstehen, die Arbeitsmöglichkeit, auch die Kochfreude bei Benutzung des Gerätes steigern zu können.

Diese Aufgabe ist beim Gegenstand des Anspruches 1 gelöst, wobei darauf abgestellt ist, dass zur Durchführung eines Bezahlvorganges eine Aktivierung der Elektronik und eines von außen zugeschalteten weiteren Telefons vorgenommen wird und ein einem Geldwert entsprechender Speicher in der geräteeigenen Elektronik zur Durchführung des Bezahlvorganges verändert wird. Von außen kann beispielsweise ein übliches Mobiltelefon zugeschaltet sein.

Insbesondere ist bevorzugt, alternativ und ergänzend zu den weiteren hier beschriebenen Merkmalen, dass das Küchengerät eine Leseeinheit für eine Geldkarte und/oder eine EC-Karte aufweist. Hierüber kann ggf. eine dem Geldwert entsprechender Speicher in dem Küchengerät geladen werden und/oder unmittelbar bei aktivierte Funkverbindung eine Abbuchung vorgenommen werden.

Insbesondere kann auch vorgesehen sein, alternativ oder ergänzend zu den weiteren hier beschriebenen Merkmalen, dass die Funktelefoneinheit in der Küchenmaschine ihrerseits unmittelbar individualisiert ist. Dies über einen speziellen Code oder etwa über eine Chipkarte, wie sie auch für ein sonstiges Mobilfunktelefon bekannt ist. Gegebenenfalls kann ein Nutzer in eine entsprechende Aufnahme der Küchenmaschine die als SIM-Karte bekannte Karte eines Mobiltelefons dort einsetzen. Hierbei kann auch vorgesehen sein, dass die in dem Küchengerät vorgesehene Elektronik zur Kommunizierung mit einem Mobiltelefon oder die unmittelbare Funkverbindungseinheit nur aktivierbar ist, wenn die genannte SIM-Karte eingelegt ist oder, etwa über eine Tastatur, ein bestimmter Code eingegeben ist.

Über eine solche Individualisierung des Küchengerätes hinsichtlich einer Funkverbindung kann gezielt an nur einem Küchengerät, das einem Kunden eindeutig zuzuordnen ist, eine Wartungsüberprüfung durchgeführt werden und/oder Daten übertragen werden, etwa Rezeptdaten. Durch eine frei einstellbare Codierung kann auch ein bestimmtes Küchengerät als beispielsweise Vorführgerät oder dergleichen individualisiert werden, um dann die entsprechenden Daten empfangen zu können.

Wartungshinweise an den Kundendienst des Herstellers oder eine automatische Rezeptabfrage ist also möglich, ohne dass eine Funkverbindung über ein weiteres ausstehendes Funkgerät (Mobiltelefon) vorzunehmen ist.

Es kann auch eine solche Codierung bzw. Freischaltung vornehmbar sein, dass in dem Gerät gespeicherte Daten, wie etwa Rezepte, bei Eingabe eines bestimmten Codes gesendet werden, etwa über eine Bluetooth-Schnittstelle, an ein daneben bzw. in Bluetooth-Reichweite befindliches Mobiltelefon, um so etwa auf einem Gerät gespeicherte Rezeptdaten oder Verfahrensdaten (Heizzyklen etc.) auf einen Datenträger, der in einem Mobiltelefon enthalten ist, zu übertragen. Insbesondere ist es möglich, eine individuelle Kochvorführung somit nachträglich hinsichtlich der hierbei durchlaufenen Zyklen und Daten aus dem Speicher des Gerätes auszulesen und zur Verwendung in einem weiteren Gerät nach Außen zu übertragen.

Es kann auch vorgesehen sein, dass die Telefonelektronik in dem Küchengerät über eine Batterie oder einen Akkumulator versorgt ist und das Küchengerät so unabhängig von einer Aktivierung als Solcher des Küchengerätes anwählbar ist.

In weiterer Ausgestaltung kann es bereits ausreichend sein, dass eine Empfangselektronik in dem Küchengerät vorgesehen ist, die im Sinne eines Radio-Empfangs, etwa im Ultrakurzwellenbereich, Signale empfangen und auswerten kann, etwa entsprechend den über diese Frequenzbänder auch übermittelten Verkehrsfunknachrichten, die dann an einem Bildschirm abgelesen werden können oder in sonstiger Weise ausgewertet werden können. Die Küchenmaschine verfügt also insofern über eine Möglichkeit, ein kodiertes Signal, das über Radiowellen bzw. Funkwellen verbreitet wird, zu empfangen und umzuwandeln bzw. auszuwerten. Weiter ist hierbei bevorzugt eine Möglichkeit vor-gesehen, dass gezielt eine einzelne Küchenmaschine für den Empfang dieser Nachrichten freigeschaltet werden kann.

Mit Funktelefon-Elektronik sind hier, ausgehend von der Funktelefonie als solcher, alle die Möglichkeiten, Module und sonstigen Soft- und Hardwarekomponenten, einzeln oder auch beliebig zusammengefasst, angesprochen, die in einem Mobiltelefon ("Handy") vorhanden sind.

Andererseits ist es alternativ, oder grundsätzlich auch ergänzend, möglich, in der Küchenmaschine eine leitungsgebundene Telefonelektronik vorzusehen.
So können Daten über einen üblichen Haus-Telefonanschluss auf die in diesem Haus befindliche Küchenmaschine übertragen werden.

Weiter ist bevorzugt vorgesehen, dass eine Freischaltung zur Benutzung dieser Funktelefon-Elektronik über Funk und/oder eine spezielle Karte und/oder die Eingabe einer Code-Nummer durch einen Benutzer erfolgen kann. Hierbei kann weiter vorgesehen sein, dass in üblicher Weise per Telefon-Datenübertragung Daten an das Gerät gesendet werden können oder von dem Gerät an einen Dritten gesendet werden können. Im Einzelnen kann hierbei geregelt sein, dass die Daten gebührenfrei gesendet werden oder wahlweise ein kostenpflichtiges Abonnementsystem genutzt wird. Weiter kann hierbei auch ein Konto gleichsam vorgefüllt mitgegeben sein, bei Erwerb eines solchen Küchengerätes. Auch kann eine eventuelle Bezahlung direkt durch elektronische Online-Buchung vermittels des so individualisierten Küchengerätes geschehen.

Durch Übermittlung eines speziellen Berechtigungscodes an eine Vertreiberfirma oder eine Service-Firma des bzw. betreffend dieses Küchengerät, wobei die Übermittlung per Telefon, Brief, Mail usw. erfolgen kann, kann ein individueller Berechtigungscode auch von dem jeweiligen Benutzer erst angefordert bzw. angegeben werden, woraufhin dann privilegierte Daten, wie beispielsweise Ablaufdaten des Gerätes oder aber auch privilegierte Daten in Form von speziellen Informationen, etwa in Form eines Rezeptes, unmittelbar an das Küchengerät übertragen werden können.

Bevorzugt weist das Küchengerät hierzu auch einen integrierten Bildschirm auf, über den die Daten, etwa in Form eines Rezeptes dann ablesbar sind. Weiter ist auch bevorzugt eine Kombination mit einer Mikrochip-Steuerung des Gerätes als solchen vorgesehen, über welche Steuerung dann vermittels übertragener Daten bestimmte Benutzungsverfahren, wie etwa im Falle eines solchen Küchengerätes, wie es hier betroffen ist, Heizzyklen, also Dauer einer Beheizung und Höhe der Temperatur, und/oder Rührwerksschaltungen und/oder Einwegekontrolldaten übermittelt und ausgewertet (beispielsweise mit vom Benutzer tatsächliche vorgenommenen Einstellungen verglichen) und gegebenenfalls in Verfahrensabläufe des Gerätes sogleich umgesetzt werden können.

Beispielsweise können über speziell für dieses Küchengerät codierte Signale Informationen an ein bestimmtes individuelles Gerät bzw. dessen Benutzer übersandt werden, wobei Rezepte oder Nachrichten empfangen und in dem Küchengerät, nicht notwendig, aber möglich, in der Funktelefon-Elektronik, etwa mit Hilfe eines nicht flüchtigen Speichers, gespeichert werden. Sie sind gegebenenfalls erst nach Aktivierung durch den Kunden dann herunterladbar.

Möglich ist auch eine wahlweise Einrichtung eines bi-direktionalen Betriebes, etwa um Wartungshinweise zu geben oder Wartungsdaten abzufragen oder um im Hinblick auf eine Wartung den Benutzer zu bitten, spezielle Funktionen zu schalten, woraufhin die Reaktion des Gerätes ermittelt werden kann.

Des Gleichen sind hierbei Kundendienstdaten von dem Küchengerät abrufbar.

Bevorzugt ist auch, dass das Küchengerät eine Wahltastatur aufweist und/oder einen Touchscreen.

Weiter ist möglich, dass mittels der in dem Küchengerät vorgesehenen Funktelefon-Elektronik eine netzartige Zusammenschaltung verschiedener gleicher Küchengeräte möglich ist. Dies auch im "Master/Slave"-Betrieb. So, dass etwa von einem "Master"-Gerät aus das Vorexerzieren einer bestimmte Zubereitung bzw, eines bestimmten Kochvorganges erfolgen kann, der dann synchron von den weiteren zugeschalteten Geräten mit vollzogen wird oder jedenfalls per übermittelter Daten von Hand nachgestellt werden kann. Dies auch bei gleichzeitig möglicher sprachlicher Kommunikation über die Funktelefon-Elektronik in dem jeweiligen Gerät. Hierzu, aber auch allgemein, ist auch bevorzugt vorgesehen, dass das Küchengerät einen Lautsprecher und ein Mikrofon aufweist. Gegebenenfalls kann auch ein Kameramodul vorgesehen sein. Soweit eine Aufnahme für ein gesondertes Funktelefon bzw. Handy an der Küchenmaschine selbst vorgesehen ist, kann die Küchenmaschine aufgrund ihrer Netzstecker-Stromversorgung auch sogleich als Ladegerät dienen.

## Patentansprüche

1. Verfahren zur Nutzung eines Systems bestehend aus einer elektromotorisch betriebenen Küchenmaschine, vorzugsweise mit einem Rührgefäß und einem Antrieb für ein Rührwerk in dem Rührgefäß, wobei die Küchenmaschine weiter einen Netzstecker aufweist und in der Küchenmaschine eine zum Empfang und Auswertung von Funk- oder Telefonsignalen und auch zum Senden entsprechender Signale geeignete Elektronik angeordnet ist, und einem weiteren Telefon, **dadurch gekennzeichnet, dass** zur Durchführung eines Bezahlvorganges eine Aktivierung der Elektronik und des von außen zugeschalteten weiteren Telefons vorgenommen wird und ein einem Geldwert entsprechender Speicher in der geräteeigenen Elektronik zur Durchführung des Bezahlvorganges verändert wird.

2. Verfahren nach Anspruch 1, **dadurch gekennzeichnet, dass** das Küchengerät durch Zuweisung eines eigenen Codes oder einer eigenen Telefonnummer individualisiert wird.

3. Verfahren nach Anspruch 1 oder 2, **dadurch gekennzeichnet, dass** die Elektronik über eine Batterie oder einen Akkumulator versorgt wird und das Küchengerät so unabhängig von einer Aktivierung als solcher des Küchengerätes angewählt werden kann.

4. Verfahren nach einem der vorhergehenden Ansprüche, **dadurch gekennzeichnet, dass** mehrere mit Funkelektronik ausgestattete Küchengeräte netzartig zusammengeschaltet werden und dass zufolge eines "Master-/Slave-Betriebes" eines an dem Master-Gerät durchgeführte Zubereitung synchron von den weiteren zugeschalteten Geräten vollzogen wird.

## Claims

1. Method for using a system consisting of an electric motor-powered food processor, preferably comprising a mixing vessel and a motor for a mixer in the mixing vessel, hte food processor further comprising a power plug, and an electronics system being arranged in the food processor which is suitable for receiving and interpreting radio or telephone signals and also for sending corresponding signals, and an additional telephone, **characterised in that**, in order to carry out a payment process, the electronics system and the externally connected additional telephone are activated, and a memoy which coresponds to monetary value, in the electronics sytem of the appliance is modified in order to carry out the payment process.

2. Method according to claim 1, **characterised in** the the food processor is distinguished by being assigned its own code or its own telephone number.

3. Method according to claim 1 or 2, **characterised in that** the eletronics system is supplied by a battery or a rechargeable battery and the food processor can therefore be dialled independently of the food processor itself being activated as such.

4. Method according to any of the preceding claims, **characterised in that** a plurality of food processors equipped with radio electronics are interconnected in the manner of a network and **in that**, as a result, a "master/slave operation" of a preparation carried out on the master appliance is carried out at the same time by the additional connected appliances.

## Revendications

1. Procédé d'utilisation d'un système se composant d'un robot ménager à moteur électrique, de préférence avec un bac à agitation et un entraînement pour un agitateur dans le bac à agitation, sachant que le robot ménager présente en outre une fiche de secteur, et un système électronique approprié à la réception et à l'évaluation de signaux radio ou téléphoniques ainsi qu'à l'envoi de signaux correspondants est disposé dans le robot ménager, et avec un autre téléphone, **caractérisé en ce que** pour la réalisation d'un processus de paiement, le système électronique et l'autre téléphone mis sous tension de l'extérieur sont activés et une mémoire correspondant à une valeur en argent dans le système électronique propre de l'appareil est modifiée pour la réalisation du processus de paiement.

2. Procédé selon la revendication 1, **caractérisé en ce que** le robot ménager est individualisé par attribution d'un propre code ou d'un propre numéro de téléphone.

3. Procédé selon la revendication 1 ou 2, **caractérisée en ce que** le système électronique est alimenté par une batterie ou un accumulateur et le robot ménager peut être appelé ainsi indépendamment d'une activation en tant que telle du robot ménager.

4. Procédé selon l'une quelconque des revendications précédentes, **caractérisée en ce que** plusieurs robots ménagers équipés d'électronique radio sont interconnectés en réseau et **en ce que** suivant un « mode maître/esclave », une préparation réalisée sur l'appareil maître est exécutée de manière synchrone par les autres appareils mis sous tension.
